# EUROPÄISCHE PATENTSCHRIFT

(11) **EP 1 892 270 B1**
(45) Veröffentlichungstag und Bekanntmachung des Hinweises auf die Patenterteilung: **22.07.2009**
(21) Anmeldenummer: 06405334.1
(22) Anmeldetag: 07.08.2006
(51) Int. Cl.: C09B 67/02, C10L 1/232, C10M 171/00, C09B 67/20

(54) **Nanopartikel eines Authentifizierungssystems**
Nanoparticles of an authentification system
Nanoparticules d'un système d'authentification

(43) Veröffentlichungstag der Anmeldung: 27.02.2008
(73) Patentinhaber: Preentec AG, 1704 Fribourg (CH); Bucher AG Langenthal, 4900 Langenthal (CH)
(72) Erfinder: Gehri, Martin, 3257 Grossaffoltern (CH); Keller, Bernhard, 3014 Bern (CH); Pellaux, René, 8004 Zürich (CH); Regenass, Peter, 4900 Langenthal (CH)
(74) Vertreter: Rüfenacht, Philipp Michael

(56) Entgegenhaltungen:
- EP-A- 1 622 178
- WO-A-00/43536
- WO-A-94/04918
- WO-A-99/40424
- WO-A-99/63007
- WO-A-02/054076
- WO-A-03/037505
- WO-A-20/04085305
- DE-A1- 19 933 104
- US-A- 4 774 189
- US-B1- 6 232 264
- KUWAHARA Y ET AL: "Construction of gold nanoparticle-ruthenium (II) tris(2,2'-bipyridine) self-assembled multistructures and their photocurrent responses" PREPARATION AND CHARACTERIZATION, ELSEVIER SEQUOIA, NL, Bd. 393, Nr. 1-2, 1. August 2001 (2001-08-01), Seiten 273-277, XP004296466 ISSN: 0040-6090

## Beschreibung

Die Erfindung bezieht sich auf die Verwendung von Nanopartikeln in einem Authentifizierungssystem zum Markieren von und zum Nachweis der Markierung in Erdöldestillaten und Rohölen, mit einer ausserhalb von deren Eigenfrequenz fluoreszierenden Substanz, insbesondere in Motorölen und Schmiermitteln, eingeschlossen äquivalente natürliche und synthetische Erzeugnisse, wobei die Nanopartikel kugelförmig, mit einem Durchmesser von 50 - 1500 nm, insbesondere von höchstens etwa 450 nm, ausgebildet sind.

Es besteht ein weit verbreitetes Bedürfnis, die erwähnten flüssigen Erzeugnisse aller Viskositätsstufen, bis hin zu pastösen Massen, mit einem äusserst geringen Anteil von feinstteiligen kugelförmigen Partikeln zu markieren. Dieser Anteil liegt in gängigen Verfahren bei höchstens 10⁻⁶, bezogen auf das zu markierende Erzeugnis. Es werden von blossem Auge nicht sichtbare Partikelgrössen im mikronen oder neuerdings auch im submikronen Bereich eingesetzt.

Erdöldestillate, eingeschlossen Rohöl, werden aus verschiedensten Gründen markiert, beispielsweise
- vom Fabrikanten zur Identifizierung seiner Produkte,
- zu Handen des Fiskus zum Nachweis missbräuchlicher Verwendung von steuerbefreiten Treibstoffen.

Die zu kennzeichnenden Erzeugnisse können auch partikelfrei markiert werden, beispielsweise mit einem einmischbaren flüssigen Farbstoff, dies ist jedoch nicht Gegenstand der vorliegenden Erfindung.

Es sind verschiedenste Markierungsarten mittels Mikro- und/oder Nanopartikeln bekannt, beispielsweise:
- Optisch aktive Partikel, welche charakteristische Spektren von elektromagnetischen Wellen im sichtbaren Bereich aussenden und Farbeffekte erzeugen,
- Nukleinsäuren mit charakteristischen Sequenzen von Basenpaaren, beispielsweise DNS mit A-G (Adenin-Guanin) und C-T (Cytosin-Thymin) Basenpaaren oder RNS mit Uracil anstelle von Thymin.
- Radioaktive Partikel mit mittlerer bis langer Halbwertszeit.
   oder Kombinationen davon.

Die WO -A- 94/04918 beschreibt ein Verfahren zur Markierung von Flüssigkeiten (z.B. Petroleumprodukte, Rohöl, etc.), bei dem Teilchen eingesetzt werden, die Fluoreszenzfarbstoffe enthalten, die jedoch nicht organische Metallkomplexe darstellen.

Die WO 03/037505 A1 beschreibt ein Verfahren zur Herstellung von kugelförmigen Partikeln aus einem Kompositmaterial mit adsorbierenden oder absorbierenden Eigenschaften. Diese Partikel umfassen ein vernetztes Acrylpolymer, in welches das sorbierte Material eingebettet ist. Die vernetzten Acrylpolymere bestehen beispielsweise aus monomeren wasserlöslichen Acrylsäuren, Acrylaten oder Polyacrylamiden. Als sorbierende Materialien werden beispielsweise Oxide von Aluminium, Magnesium, Silicium, Titan oder Zirkon erwähnt. Die Partikelgrösse liegt im Mikro- oder Nanobereich.

Die US 4774189 offenbart ebenfalls kugelförmige Mikropartikel, welche mit einem Fluoreszenzfarbstoff markiert sind. Die Anregungs- und Emissionsspektren gleichen demjenigen der zu messenden Proben. Die Mikropartikel bestehen bevorzugt aus Acrylaten, welche auch mit Styrolen oder Vinyltoluolen beladen sind. Als Farbstoffe werden beispielsweise Texasrot, fluoreszierende Isothiocyanate oder Amine erwähnt. Eine wesentliche Rolle spielt die Kalibrierung eines Durchflusszytometers (Flow-cytometers) oder eines Fluoreszenzmikroskops, welche zum Nachweis der Markierungen benötigt werden.

Die US 5643728 offenbart eine Markierungsmethode für Flüssigkeiten, insbesondere für Oele, sowie ein Verfahren zur Detektierung und Identifizierung der erwähnten Markierungen. Das Verfahren umfasst das Einbringen von Mikropartikeln, sogenannten "Microbeads", eines Durchmessers von weniger von 5 µm, aber auch Nanopartikeln eines Durchmessers von 10 bis 1000 nm. Die Partikel bestehen beispielsweise aus Polyacrylaten, Polysachariden und/oder Polyamiden. Die Mikropartikel sind in einem flüssigen organischen Medium, beispielsweise Chloroform oder Petroleum, dispergiert. Diese Dispersion wird als Additiv in den zu markierenden Stoff eingemischt. Mikro- bzw. Nanopartikel können mit einem oder mehreren Markierern versehen sein, welche z.B. Enzyme, DNA oder RNA sowie fluoreszierende Stoffe und Farben umfassen. Die markierten optisch wirksamen Mikro- bzw. Nanopartikel können durch Fluoreszenzmikroskopie oder durch ein Durchflusscytometer (Flowcytometer) detektiert werden.

Die DE 199 33 104 A1 beschreibt die Herstellung und Verwendung von phosphoreszierenden Mikro- und Nanopartikel die z. B. zur Markierung und Detektion von Biomolekülen dienen. Die Partikel enthalten Farbstoffe, wie beispielsweise Ru(II)-tris-1,10-phenantrolin oder Ru(II)-tris-4,7-diphenyl-1,10-phanantrolin, welche in einer Matrix aus organischen Polymeren, z. B. Polyvinylchlorid, Polyvinylidenchlorid, Polyacrylnitril, oder in Sol-Gel-Gläsern eingelagert sind. Die Sol-Gel-Gläser können dicht oder von poröser Struktur sein, wodurch gelöste Probebestandteile in die Partikel aufgenommen werden können. Mit dem Herstellungsverfahren können Mikro- oder Nanopartikel mit einem Durchmesser mit weniger als 50 nm hergestellt. Durch eine Silanisierung der Oberfläche, können Biomoleküle an die Oberfläche der Partikel kovalent gekoppelt werden.

In der WO 99/63007 wird die Modifikation von Partikeln auf Russbasis oder Farbpigmenten beschrieben, welche z. B. für Beschichtungen, in Tinten als Toner oder als Zusätze zur Verstärkung von Elastomeren Verwendung finden. Die Partikel weisen eine Grösse von 10 - 500 nm auf und können eine Si-, Ti-, Cr- oder Zr-haltige Seitengruppe aufweisen, an welche zudem ein Polymer mit einem labilen halogen-haltigen Radikal gekoppelt ist. Während der Modifikation der Partikel werden Pt-Metall-Halogenide mit organischen Liganden umgesetzt, welche die Polymerisation ermöglichen. Als organische Liganden kommen beispielsweise 2,2'-Bipyridien zum Einsatz. Die gebildeten Polymere sind beispielsweise Polyacrylamide.

Der vorliegenden Erfindung liegt die Aufgabe zugrunde, Nanopartikel zur Verwendung in Erdöldestillaten und Rohölen vorzuschlagen, welche trotz rauen industriellen Bedingungen ein einfaches und kostengünstiges Authentifizierungssystem ohne Leistungseinbusse erlauben.

Die Aufgabe wird erfindungsgemäss dadurch gelöst, dass in den Nanopartikeln thermo- und photostabile, fluoreszierende Farbpigmente aus wenigstens einem metallorganischen Komplex auf der Basis von Übergangsmetallen der Platingruppeoder Ruthenium, eingeschlossen deren wasserlösliche Salze, dispergiert sind. Spezielle und weiterbildende Ausführungsformen von Nanopartikeln sind Gegenstand von abhängigen Patentansprüchen.

Metallorganische Komplexe haben ein zentrales Metallatom und peripher angelagerte organische Verbindungen, Farbstoffmoleküle, die Liganden. Es entstehen polare Bindungsorbitale, welche im peripheren Bereich negativ und im Bereich des Metallatoms positiv sind. Deshalb bilden die metallorganischen Komplexe Salze, insbesondere mit den Ionen von Alkali- und Erdalkalimetallen.

Das erfindungsgemäss bevorzugte komplexbildende Ruthenium liegt vorzugsweise in der Oxidationsstufe Ru(II) vor. Ruthenium kann jedoch auch in der Oxidationsstufe Ru(III) oder Ru(IV) eingesetzt werden.

Fluoreszierend markierende Substanzen auf der Basis von Ruthenium weisen eine grosse Stokes-Verschiebung auf, d.h. die Wellenlängen von Anregungsund Emissionslicht sind ausserordentlich unterschiedlich, was eine problemlose Trennung ermöglicht, das emittierte Licht kann praktisch ohne Streulicht erfasst werden. Mit andern Worten kann bei der Verwendung fluoreszierender Rutheniumkomplexe, welche überdies lange Abklingzeiten haben, der erfindungswesentliche Nachweis einer Markierung wesentlich einfacher und kostengünstiger als bisher erbracht werden.

Auf Ruthenium (II) basierende Farbpigmente sind in grosser Zahl bekannt, allein rund 75'000 Ruthenium (II) - Diimin - Komplexe. Die Palette ist also sehr gross.

Im praktischen Einsatz haben sich insbesondere Rutheniumkomplexe bewährt, welche Polypyridine, insbesondere Bipyridine, Phenantroline oder Porphyrine, umfassen. Strukturell besteht Pyridin im wesentlichen aus einem Benzolring mit einem eingebauten Stickstoffatom. Polypyridine haben in der Regel nur in einem aromatischen Ring ein Stickstoffatom. Die Liganden der metallorganischen Komplexe sind bevorzugt in einem vorausbestimmten Mischverhältnis angeordnet.

Als besonders vorteilhaft hat sich die Komponente Tris(2,2'-Bipyridin) Dichlororuthenium (II) Hexahydrat. Weitere in der Praxis bewährte Komponenten sind Dichloro tris(1,10 - Phenanthrolin) Ruthenium (II) Tris(2,2'-Bipyridin) Dichlororuthenium (II) Hexahydrat; Dichloro tris(1,10-Phenantrolin) Ruthenium (II); tris(4,7-Diphenyl-1,10-Phenanthrolin) Ruthenium (II) Dichlorid; tris(2,2'-Bipyridyl-Dichlororuthenium (II) Hexahydrat; 2,3,7,8,12,13,17,18-Octaethyl-µ21H,23H - Porphin Ruthenium (II) - Carbonyl; bis(2,2'-Bipyridine) - 4,4'- Dicarboxybipyridin - Ruthenium - di(N-Succinimidylester) bis (Hexafluorophosphat); bis(2,2'-Bipyridin) - 4' - Methyl-4-Carboxybipyridin - Ruthenium N-Succinimidylester-bis (Hexafluorohposphat); bis(2,2'-Bipyridin)-(5-Aminophenanthrolin) Ruthenium bis (Hexafluorophosphat); bis(2,2'-Bipyridin)-(5-Isothiocyanato-Phenanthrolin) Ruthenium bis (Hexafluorophosphat); tris(2,2' Bipyridyl-d8)Ruthenium (II) Hexafluorophosphat; tris(4,7 Diphenyl-1,10-Phenantrolin) Ruthenium (II) bis (Hexafluorophosphat) Komplex; tris(4,7-Diphenyl-1,10-Phenanthrolin) Ruthenium (II) bis (Perchlorat) Komplex und tris(Bathophenanthrolindisulfonat) Ruthenium (II) Natrium-Salz.

Als Trägermaterial für die Farbpigmente werden in erster Linie thermoplastische Kunststoffe eingesetzt, insbesondere ein vernetzbares Akrylpolymer, wie beispielsweise Polyacrylamid. Diese insgesamt als sorbierende Mikro- oder Nanopartikel bezeichneten Kompositmaterialien sind in der WO 03/037505 A1 in ihrer ganzen Vielfalt im Detail beschrieben. Auf diese Publikation wird ausdrücklich verwiesen.

Wassersorbierende Materialien gemäss der vorliegenden Erfindung haben den Vorteil, dass einzelne Komponenten mittels einer wässrigen und/oder organischen Lösung nach allgemein üblichen Methoden elutiert werden können.

Die erfindungsgemässen Nanopartikel liegen vorzugsweise in einem Durchmesserbereich von 50 - 1500 nm, insbesondere höchstens etwa 450 nm. Auch wenn die oberste Grenze für den Durchmesser der kugelförmigen Partikel bereits im untersten Mikrometerbereich liegt, werden sie einfachheitshalber trotzdem auch als Nanopartikel bezeichnet.

Eine wesentliche Eigenschaft der erfindungsgemässen Nanopartikel ist deren Thermostabilität, welche mindestens bis zu einer Temperatur von etwa 150 °C, vorzugsweise jedoch bis etwa 250 °C, gewährleistet sein muss, immer den gestellten Anforderungen entsprechend. Versuche mit Ru(II)-Komplexen haben gezeigt, dass alle während vier Wochen ununterbrochen bei etwa 150 °C einsetzbar sind, ohne dass eine erfassbare nachteilige Veränderung eintritt.

Ein weiterer Vorteil der erfindungsgemässen Nanopartikel ist deren bevorzugt hydrophiler Charakter, der in engem Zusammenhang mit den Sorbtionseigenschaften steht. Die Nanopartikel sind auch zur Implementierung in Hydrogelen sehr geeignet.

Alle Arten der vorgenannten Nanopartikel können zusätzlich zu wenigstens einem metallorganischen Komplex in die kugelförmigen Nanopartikel integriert werden, mit oder ohne eigenen Farbeffekt. So entsteht bei der zusätzlichen Zugabe von DNS- und/oder RNS, also einer alternativen Methode.

Die Synthese der Farbpigmente und der damit bestückten Nanopartikel erfolgt nach dem allgemein üblichen Stand der Technik. Bevorzugt wird eine Emulsionspolymerisation, bei welcher die Parameter Ausgangsemulsion, Mischverhältnis, oberflächenaktive Stoffe, Emulgatoren, Temperatur und Einsatz eines Radikalstarters wesentliche Stichworte für den Prozess sind.

### Synthesebeispiel

In einem mit Stickstoff gefüllten und auf 60 °C temperierten Polymerisationsreaktor mit Rückflusskühler (100 ml) werden 55 ml entgastes niedrigviskoses Mineralöl (low viscosity) vorgelegt und mit 1.24 ml Span 80 und 0.14 ml Tween 85 versetzt. Span 80 und Tween 85 sind kommerziell erhältlich.

In 1.5 ml mit Stickstoff entgastem und bidestilliertem Wasser werden zwischen 80 mg und 220 mg Tris(2,2'-Bipyridin) Dichlororuthenium (II) Hexahydrat gelöst. Diese Lösung wird mit 1.5 ml 40%iger Acrylamidlösung mit 1/80 N,N'-Methylen bis Acrylamid gemischt und wiederum mit Stickstoff entgast. Diese Emulgatorlösung wird in den Reaktor gegeben und während 5 min dispergiert. Nach 5 min werden 400 µl N,N,N',N'-Tetramethylethylendiamin zugegeben. Anschliessend wird mit dem gelösten Initiator, 400 µl einer 25%igen Ammoniumperoxydisulfat Lösung, die Reaktion gestartet. Die Temperatur wird auf 60 °C konstant gehalten. Eine kleine Restmenge an Initiator, 1/5 der Gesamtmenge, werden nach 60 min in den Reaktor injiziert, um die Reaktion vollständig abzuschliessen.
Die resultierenden sphärischen Nanopartikel werden über einen 5 µm Polypropylenfilter filtriert.

## Patentansprüche

1. Verwendung von Nanopartikeln in einem Authentifizierungssystem zum Markieren von und zum Nachweis der Markierung in Erdöldestillaten und Rohölen, mit einer ausserhalb von deren Eigenfrequenz fluoreszierenden Substanz, insbesondere in Motorölen und Schmiermitteln, eingeschlossen äquivalente natürliche und synthetische Erzeugnisse, wobei die Nanopartikel kugelförmig, mit einem Durchmesser von 50 - 1500 nm, insbesondere von höchstens etwa 450 nm, ausgebildet sind,
**dadurch gekennzeichnet, dass**
in den Nanopartikeln thermo- und photostabile, fluoreszierende Farbpigmente aus wenigstens einem metallorganischen Komplex auf der Basis von Übergangsmetallen der Platingruppe oder Ruthenium, eingeschlossen deren wasserlösliche Salze, dispergiert sind

2. Verwendung von Nanopartikeln nach Anspruch 1, **dadurch gekennzeichnet, dass** die Farbpigmente Rutheniumkomplexe sind, insbesondere der Oxidationsstufe Ru (II).

3. Verwendung von Nanopartikeln nach Anspruch 2, **dadurch gekennzeichnet, dass** die Farbpigmente Ruthenium (II) - Diimin - Komplexe umfassen.

4. Verwendung von Nanopartikeln nach Anspruch 2 oder 3, **dadurch gekennzeichnet, dass** die Liganden der Rutheniumkomplexe Polypyridine, insbesondere Bipyridine, Phenantroline oder Porphyrine umfassen, wobei die Liganden vorzugsweise in einem vorausbestimmten Mischverhältnis angeordnet sind.

5. Verwendung von Nanopartikeln nach wenigstens einem der Ansprüche 2 bis 4, **dadurch gekennzeichnet, dass** die Farbpigmente wenigstens eine der folgenden Komponenten umfassen: Tris(2,2'-Bipyridin) Dichlororuthenium (II) Hexahydrat; Dichloro tris(1,10-Phenantrolin) Ruthenium (II); tris(4,7-Diphenyl-1,10-Phenanthrolin) Ruthenium (II) Dichlorid; tris(2,2'-Bipyridyl-Dichlororuthenium (II) Hexahydrat; 2,3,7,8,12,13,17,18-Octaethyl-µ21H,23H - Porphin Ruthenium (II)-Carbonyl; bis(2,2'-Bipyridine)-4,4'-Dicarboxybipyridin - Ruthenium - di(N-Succinimidylester) bis (Hexafluorophosphat); bis(2,2'-Bipyridin) - 4' - Methyl-4-Carboxybipyridin - Ruthenium N-Succinimidylester-bis (Hexafluorohposphat); bis(2,2'-Bipyridin)-(5-Aminophenanthrolin) Ruthenium bis (Hexafluorophosphat); bis(2,2'-Bipyridin)-(5-Isothiocyanato-Phenanthrolin) Ruthenium bis (Hexafluorophosphat); tris(2,2' Bipyridyl-d8)Ruthenium (II) Hexafluorophosphat; tris(4,7 Diphenyl-1,10-Phenantrolin) Ruthenium (II) bis (Hexafluorophosphat) Komplex; tris(4,7-Diphenyl-1,10-Phenanthrolin) Ruthenium (11) bis (Perchlorat) Komplex und tris(Bathophenanthrolindisulfonat) Ruthenium (11) Natrium-Salz.

6. Verwendung von Nanopartikeln nach einem der Ansprüche 1 bis 5, **dadurch gekennzeichnet, dass** das Trägermaterial für die Farbpigmente aus einem absorbierenden und/oder adsorbierenden Material besteht, das vorzugsweise auch hydrophile Eigenschaften hat.

7. Verwendung von Nanopartikeln nach einem der Ansprüche 1 bis 6, **dadurch gekennzeichnet, dass** das Trägermaterial für die Farbpigmente aus einem thermoplastischen Kunsstoff besteht, insbesondere einem vernetzten Acrylpolymer, wie einem Polyacrylamid.

8. Verwendung von Nanopartikeln nach einem der Ansprüche 1 bis 7, **dadurch gekennzeichnet, dass** sie bis zu einer Temperatur von etwa 150°C, vorzugsweise bis etwa 250°C, thermostabil sind.

9. Verwendung von Nanopartikeln nach einem der Ansprüche 1 bis 8, **dadurch gekennzeichnet, dass** sie zusätzlich zu den Farbpigmenten weitere Markiersubstanzen enthalten, insbesondere DNS und/oder RNS.

10. Erdöldestillat oder Rohöl, insbesondere Motoröl und Schmiermittel, eingeschlossen äquivalente natürliche und synthetische Erzeugnisse, enthaltend Nanopartikel eines Authentifizierungssystems zum Markieren von und zum Nachweis der Markierung im Erdöldestillat oder Rohöl, mit einer ausserhalb von deren Eigenfrequenz fluoreszierenden Substanz, wobei in den Nanopartikeln thermo- und photostabile, fluoreszierende Farbpigmente aus wenigstens einem metallorganischen Komplex auf der Basis von Übergangsmetallen der Platingruppe oder Ruthenium, eingeschlossen dessen wasserlösliche Salze, dispergiert sind und wobei die Nanopartikel kugelförmig, mit einem Durchmesser von 50 - 1500 nm, insbesondere von höchstens etwa 450 nm, ausgebildet sind.

## Claims

1. Use of nanoparticles in an authentification system for marking and for detecting marking in crude oil distillates and crude oils, comprising a substance which fluoresces outside the intrinsic frequency thereof, especially in motor oils and lubricants, including equivalent natural and synthetic products, the nanoparticles being in spherical form with a diameter of 50 - 1500 nm, especially of at most about 450 nm,
**characterized in that**
thermally stable and photostable fluorescent colour pigments composed of at least one organometallic complex based on transition metals of the platinum group or ruthenium, including the water-soluble salts thereof, are dispersed in the nanoparticles.

2. Use of nanoparticles according to Claim 1, **characterized in that** the colour pigments are ruthenium complexes, especially of the Ru(II) oxidation state.

3. Use of nanoparticles according to Claim 2, **characterized in that** the colour pigments comprise ruthenium(II) -diimine complexes.

4. Use of nanoparticles according to Claim 2 or 3, **characterized in that** the ligands of the ruthenium complexes include polypyridines, especially bipyridines, phenanthrolines or porphyrins, the ligands preferably being arranged in a predetermined mixing ratio.

5. Use of nanoparticles according to at least one of Claims 2 to 4, **characterized in that** the colour pigments comprise at least one of the following components: tris(2,2'-bipyridine)dichlororuthenium(II) hexahydrate; dichlorotris(1,10-phenanthroline)ruthenium(II); tris(4,7-diphenyl-1,10-phenanthroline)ruthenium(II) dichloride; tris(2,2'-bipyridyl)dichlororuthenium(II) hexahydrate; (2,3,7,8,12,13,17,18-octaethyl-µ21H,23H-porphin)ruthenium(II) carbonyl; bis(2,2'-bipyridine)-9,4'-dicarboxybipyridineruthenium di(N-succinimidyl ester) bis(hexafluorophosphate); bis(2,2'-bipyridine)-4'-methyl-4-carboxybipyridineruthenium N-succinimidyl ester bis(hexafluorophosphate); bis(2,2'-bipyridine)(5-aminophenanthroline)ruthenium bis(hexafluorophosphate); bis(2,2'-bipyridine)(5-isothiocyanatophenanthroline)ruthenium bis(hexafluorophosphate); tris(2,2'-bipyridyl-d8)ruthenium(II) hexafluorophosphate; tris(4,7-diphenyl-1,10-phenanthroline)ruthenium(II) bis(hexafluorophosphate) complex; tris(4,7-diphenyl-1,10-phenanthroline)ruthenium(II) bis(perchlorate) complex and tris(bathophenanthrolinedisulphonate)ruthenium(II) sodium salt.

6. Use of nanoparticles according to any one of Claims 1 to 5, **characterized in that** the carrier material for the colour pigments consists of an absorbent and/or adsorbent material which preferably also has hydrophilic properties.

7. Use of nanoparticles according to any one of Claims 1 to 6, **characterized in that** the carrier material for the colour pigments consists of a thermoplastic polymer, especially a crosslinked acrylic polymer, such as a polyacrylamide.

8. Use of nanoparticles according to any one of Claims 1 to 7, **characterized in that** they are thermally stable up to a temperature of about 150°C, preferably to about 250°C.

9. Use of nanoparticles according to any one of Claims 1 to 8, **characterized in that** they contain further marker substances in addition to the colour pigments, especially DNA and/or RNA.

10. Crude oil distillate or crude oil, especially motor oil and lubricant, including equivalent natural and synthetic products, comprising nanoparticles of an authentification system for marking and for detecting marking in the crude oil distillate or crude oil, comprising a substance which fluoresces outside the intrinsic frequency thereof, wherein thermally stable and photostable fluorescent colour pigments composed of at least one organometallic complex based on transition metals of the platinum group or ruthenium, including the water-soluble salts thereof, are dispersed in the nanoparticles, and wherein the nanoparticles are in spherical form with a diameter of 50 - 1500 nm, especially of at most about 450 nm.

## Revendications

1. Utilisation de nanoparticules dans un système d'authentification destiné au marquage de distillats pétroliers et de pétroles bruts, et à la détection du marquage dans des distillats pétroliers et des pétroles bruts, à l'aide d'une substance fluorescente à l'extérieur de sa fréquence propre, en particulier dans les huiles moteurs et les lubrifiants, y compris les produits naturels et synthétiques équivalents, les nanoparticules ayant une configuration sphérique, avec un diamètre de 50 à 1500 nm, en particulier d'au plus environ 450 nm, **caractérisée en ce que** des pigments colorés fluorescents, thermostables et photostables, constitués d'au moins un complexe organométallique à base de métaux de transition du groupe du platine, ou de ruthénium, y compris leurs sels solubles dans l'eau, sont dispersés dans les nanoparticules.

2. Utilisation de nanoparticules selon la revendication 1, **caractérisée en ce que** les pigments colorés sont des complexes du ruthénium, avec en particulier le degré d'oxydation Ru(II).

3. Utilisation de nanoparticules selon la revendication 2, **caractérisée en ce que** les pigments colorés comprennent des complexes ruthénium(II)-diimine.

4. Utilisation de nanoparticules selon la revendication 2 ou 3, **caractérisée en ce que** les ligands des complexes du ruthénium comprennent des polypyridines, en particulier des bipyridine, des phénanthrolines ou des porphyrines, les ligands étant de préférence disposés selon un rapport de mélange prédéterminé.

5. Utilisation de nanoparticules selon au moins l'une des revendications 2 à 4, **caractérisée en ce que** les pigments colorés comprennent au moins l'un des composés suivants : tris(2,2'-bipyridine)-dichlororuthénium(II) hexahydraté ; dichloro-tris(1,10-phénanthroline)ruthénium(II) ; dichlorure de tris(4,7-diphényl-1,10-phénanthroline)-ruthénium(II) ; tris(2,2'-bipyridyl-dichlororuthénium(II) hexahydraté ; 2,3,7,8,12,13,17,18-octaéthyl-µ21H,23H-porphineruthénium(II)-carbonyle ; bis(hexafluorophosphate du di(ester N-succinimidylique) du bis(2,2'-bipyridine)-4,4'-dicarboxybipyridine-ruthénium ; bis(hexafluorophosphate de l'ester N-succinimidylique du bis(2,2'-bipyridine)-4'-méthyl-4-carboxybipyridine-ruthénium ; bis(hexafluorophosphate) de bis(2,2'-bipyridine)-(5-aminophénanthroline)-ruthénium ; bis(hexafluorophosphate) de bis(2,2'-bipyridine)-(5-isothiocyanatophénanthroline)-ruthénium ; hexafluorophosphate de tris(2,2'-bipyridyl-d8)ruthénium(II) ; complexe bis(hexafluorophosphate) de tris(4,7-diphényl-1,10-phénanthroline)-ruthénium(II) ; complexe bis(perchlorate) de tris(4,7-diphényl-1,10-phénanthroline)-ruthénium(II) et sel de sodium du tris(bathophénanthrolinedisulfonate)ruthénium(II).

6. Utilisation de nanoparticules selon l'une des revendications 1 à 5, **caractérisée en ce que** le matériau support des pigments colorés est constitué d'un matériau absorbant et/ou adsorbant, qui de préférence possède aussi des propriétés hydrophiles.

7. Utilisation de nanoparticules selon l'une des revendications 1 à 6, **caractérisée en ce que** le matériau support des pigments colorés est constitué d'un plastique thermoplastique, en particulier d'un polymère acrylique réticulé tel qu'un polyacrylamide.

8. Utilisation de nanoparticules selon l'une des revendications 1 à 7, **caractérisée en ce qu'**elles sont thermostables jusqu'à une température d'environ 150°C, de préférence jusqu'à environ 250°C.

9. Utilisation de nanoparticules selon l'une des revendications 1 à 8, **caractérisée en ce que,** outre les pigments colorés, elles contiennent des substances de marquage supplémentaires, en particulier de l'ADN et/ou de l'ARN.

10. Distillat pétrolier ou pétrole brut, en particulier huile moteur et lubrifiant, y compris les produits naturels et synthétiques équivalents, contenant des nanoparticules d'un système d'authentification destiné au marquage de distillats pétroliers ou de pétroles bruts, ou à la détection du marquage dans des distillats pétroliers ou des pétroles bruts, à l'aide d'une substance fluorescente à l'extérieur de sa fréquence propre, des pigments colorés fluorescents, thermostables et photostables, constitués d'au moins un complexe organométallique à base de métaux de transition du groupe du platine ou de ruthénium, y compris leurs sels solubles dans l'eau, étant dispersés dans les nanoparticules, les nanoparticules ayant une configuration sphérique, avec un diamètre de 50 à 1500 nm, en particulier d'au plus 450 nm.
